# FASCICULE DE BREVET EUROPEEN

(11) **EP 1 179 261 B1**
(45) Date de publication et mention de la délivrance du brevet: **10.12.2008**
(21) Numéro de dépôt: 00929634.4
(22) Date de dépôt: 18.05.2000
(51) Int. Cl.: H04M 15/00

(54) **TELEPHONIE MOBILE A PERIMETRES DE TRAITEMENT SELECTIF**
MOBILTELEFONIE MIT SELEKTIVER PERIMETERNVERARBEITUNG
MOBILE TELEPHONE SYSTEM WITH SELECTIVE PROCESSING PERIMETERS

(30) Priorité: 19.05.1999 FR 9906348
(43) Date de publication de la demande: 13.02.2002
(73) Titulaire: INRIA INSTITUT NATIONAL DE RECHERCHE EN INFORMATIQUE ET EN AUTOMATIQUE, Rocquencourt F-78153 Le Chesnay (FR)
(72) Inventeur: BANATRE, Michel, F-35111 La Fresnais (FR); COUDERC, Paul, F-35000 Rennes (FR)
(74) Mandataire: Plaçais, Jean Yves
(86) Numéro de dépôt international: PCT/FR2000/001350
(87) Numéro de publication internationale: WO 2000/072553

(56) Documents cités:
- EP-A- 0 568 824
- FR-A- 2 725 579
- GB-A- 2 322 262
- US-A- 5 890 054

## Description

L'invention concerne la téléphonie mobile sans fil.

Les téléphones dits "portables" ou "mobiles" permettent à leur détenteur d'appeler de pratiquement tout endroit dans la limite de l'étendue de la couverture géographique prévue par l'exploitant ou "opérateur" du système. La tarification, qui se fait en fonction du temps, est souvent aménagée par un forfait de durée et/ou en fonction de certaines périodes, appels de nuit par exemple.

Différents facteurs, dont sans doute les habitudes prises avec la téléphonie filaire, ont conduit à rechercher l'établissement d'une modulation géographique de la tarification.

C'est ainsi qu'ont émergé des solutions qui prévoient de marier la téléphonie mobile et le Système de radionavigation GPS, pour la localisation et la modulation de tarif, comme celle du brevet US 5 815 814 (Dennison et al. ; SIGNET COMMUNICATIONS). Intéressante par sa généralité d'application, et du fait du coût décroissant des récepteurs GPS, cette solution a cependant l'inconvénient que la combinaison de la téléphonie et du GPS n'est pas banale, et se trouve plus difficile à mettre en oeuvre en intérieur.

Dans le brevet FR-A-2725579, des conditions d'accès ou de tarification différenciées sont proposées aux abonnés. Pour bénéficier de ces conditions, l'abonné doit souscrire un abonnement spécifique. L'inconvénient d'un tel service réside dans la souscription de cet abonnement à la charge de l'abonné.

De même, dans le document EP-A-0568824, pour bénéficier d'une réduction tarifaire, le poste portatif doit être préprogrammé à l'égard d'une ou plusieurs zones présélectionnées. L'inconvénient d'une telle solution réside dans la modification de l'équipement téléphonique, qui rend contraignante la mise en oeuvre d'une telle solution.

Le Demandeur a conçu une autre solution, fondée sur une approche nettement différente et applicable à toute application associée aux appels (notamment tarification mais aussi traitement de données, profil des usagers, communication privilégiée entre l'exploitant et l'usager, etc).

De façon connue, les techniques de téléphonie consistent à:
a) prévoir une pluralité de bornes proximales, distribuées spatialement pour permettre la communication sans fil avec des postes portatifs d'usagers selon une couverture géographique étendue, et
b) prévoir au moins une station de gestion pour relayer les communications d'usagers passant par lesdites bornes proximales vers un réseau téléphonique.

Selon un aspect de l'invention:
- à l'étape a), on agence au moins une borne de façon qu'elle couvre sensiblement exactement l'intérieur d'un périmètre choisi, et
- à l'étape b), on module le traitement d'au moins une application associée aux appels en fonction du passage de ces appels dans le périmètre couvert par la borne ainsi agencée.

Ainsi, grâce à l'invention, le traitement d'au moins une application associée aux appels (tarification, traitement de données, profil des usagers, communication privilégiée entre l'exploitant et l'usager, services spécifiques et/ou locaux, etc) est adapté ou modulé, de façon dynamique, sans souscription d'un abonnement, sans modification de l'équipement téléphonique de l'usager pour certaines mises en oeuvre ou compatible avec les téléphones nouvelles générations, en fonction du passage de ces appels dans le périmètre couvert par la borne ainsi agencée.

D'autres caractéristiques et avantages de l'invention apparaîtront à l'examen de la description détaillée ci-après, ainsi que des dessins annexés, sur lesquels :
- la figure 1 est un schéma de l'implantation de différentes bornes de part et d'autre d'un périmètre, avec la liaison de ces bornes à une station centrale,
- la figure 2 est le schéma-bloc des opérations de base permettant la tarification selon l'invention,
- la figure 3 est un schéma de l'implantation de stations mobiles dans un périmètre de traitement sélectif permettant d'assurer une communication indirecte entre les postes portatifs et une borne agencée selon l'invention, et
- la figure 4 est un schéma de l'implantation de différentes stations mobiles dans un périmètre de traitement sélectif dans lequel une station de gestion de périmètre remplace la borne décrite en référence à la figure 3 selon l'invention.

Les dessins annexés comportent des éléments de caractère certain. En conséquence, ils pourront non seulement servir à mieux faire comprendre l'invention, mais aussi contribuer à la définition de celle-ci, le cas échéant.

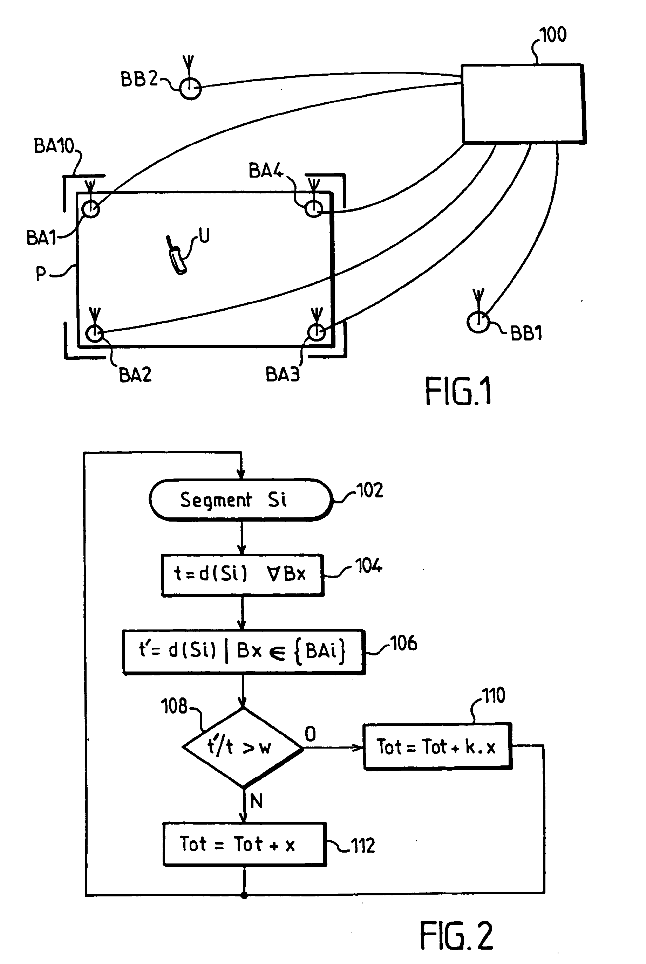

Sur la figure 1, il apparaît un groupe de stations BAi, ici BA1 à BA4, placées pour simplifier aux quatre coins d'un périmètre P.

On sait que l'émission des stations proximales de téléphonie mobile est en principe omnidirectionnelle, mais également rendue compliquée par de très nombreuses réflexions, car la propagation peut être complexe aux fréquences de travail utilisées.

Selon un premier aspect de l'invention, les stations utilisées pour couvrir le périmètre P sont prévues avec des caractéristiques radiatives nettement délimitées, ce que l'on a illustré ici par des absorbeurs en coin tels que BA10, qui confinent la zone rayonnante de la borne proximale BA1 vers l'intérieur du périmètre P. Dans certains cas au moins, on pourrait compléter ces absorbeurs par des écrans opaques aux rayonnement électromagnétiques, formant cage de Faraday partielle, avec les inévitables réflexions qui peuvent en découler. Une combinaison d'absorbeurs derrière ou devant des éléments réflecteurs du type Faraday peut être utilisée aussi. On peut encore utiliser des éléments rayonnants qui sont eux-mêmes intrinsèquement directionnels.

A côté de cela, aux environs du périmètre P, il existe des stations normales telles que BBj, ici BB1 et BB2, qui, elles, peuvent être omnidirectionnelles. Toutes les stations BAi et BBj sont reliées à une station centrale de gestion 100, par des liaisons classiquement utilisées en téléphonie mobile (l'expression "station centrale" n'exclut pas une disposition physique sous forme "distribuée" de la fonction de cette station). Et la station 100 peut relayer les conversations téléphoniques, dans les deux sens, vers le réseau commuté ou vers d'autres réseaux.

Sans réglages particuliers, la puissance d'émission d'une borne BBj peut être telle que sa zone de couverture recouvre en fait celle des bornes BAi. Cependant dans le cadre de l'invention, on considère que la puissance des bornes BBj peut se régler de telle façon qu'en l'absence des phénomènes de rayonnement, mentionnés ci-après, un abonné ou client Ck, qui se trouve à l'instant t dans le rayonnement d'une borne BBj et qui, compte tenu de son déplacement, se trouve à l'instant t' (t'>t), localisé physiquement dans la zone de couverture d'une borne BAi est pris en charge par cette borne BAi.

Un autre problème se pose, du fait que, en pratique, il sera relativement difficile d'obtenir une couverture électromagnétique, par les bornes BAi, qui corresponde exactement au périmètre P. Ceci est d'autant plus vrai que le périmètre P est ici illustré comme rectangulaire, ce qui sera fréquemment le cas dans les applications dont il sera question ci-après, mais des périmètres plus complexes peuvent être rencontrés.

En outre, on sait que la téléphonie mobile est sujette à des problèmes de réflexion d'ondes, qui suivent des trajets assez complexes, et multiples. Il en découle ainsi qu'un appel téléphonique réalisé par un usager U à l'intérieur du périmètre P peut se trouver temporairement pris en charge par la station externe BB1, avec laquelle il se trouve en vue, du fait de trajets multiples, voire même d'une saturation de la station BAi qu'il avait précédemment en charge.

Pour résoudre ces problèmes, l'invention prévoit que:
- la station centrale 100 est informée non seulement de l'identité de l'abonné appelant, mais aussi de l'identité de la borne proximale qui le prend en charge, ou, du moins, du fait que cette entité est une entité du groupe BAi, ou au contraire une autre entité telle que BBj, et
- cette information va être utilisée pour moduler la tarification.

Bien que d'autres modes de réalisation puissent être envisagés, il est considéré comme actuellement préférentiel que la modulation de tarif se fasse sur la base de segments temporels de communication. On note Si un tel segment. Il est également considéré comme préférentiel que la modulation de tarif se fasse en tout ou rien.

Ainsi, la technique préférentielle est illustrée sur la figure 2.

Cette figure concerne le segment Si, comme indiqué à l'étape d'entrée 102.

La station centrale 100 va tout d'abord mesurer un temps t, qui est la durée de ce segment Si, quelle que soit la station proximale qui relaie la communication, ainsi que l'indique l'étape 104.

A l'étape 106, la station 100 mesure une durée t', qui est la durée de la part temporelle du segment Si, pendant laquelle la communication passe par une station Bx, qui appartient à l'ensemble des stations BAi, ainsi que l'indique l'étape 106.

A la fin de chaque segment i, l'étape 108 calcule le rapport t'/t, et examine s'il est supérieur à un seuil w, par exemple 0,1 ou 0,2, ou bien 0,5, ou encore 0,8 ou 0,9, suivant l'équilibre que l'on souhaite donner au système.

Si la quote-part t'/t ne dépasse pas le seuil w, on effectue la tarification normale à l'étape 112, c'est-à-dire que le total tarifé est augmenté de la quantité x associée à la durée du segment Si.

Si au contraire la quote-part t'/t dépasse le seuil w, alors l'étape 110 va augmenter le total de tarification de la quantité x modulée par un facteur k, qui peut être supérieur à 1 (augmentation tarifaire) dans certains cas, mais sera le plus souvent inférieur à 1, procurant ainsi une réduction tarifaire.

On obtient ainsi une technique simple et locale pour moduler la tarification des appels, sans pour autant chercher à déterminer la position exacte du téléphone mobile de l'usager qui appelle.

Bien entendu, la modulation de la tarification des appels peut se faire par d'autres fonctions tenant compte de la part du segment temporel de communication qui passe par les bornes proximales du groupe BAi.

On peut aussi réaliser plusieurs modes de modulation tarifaire, en prévoyant des couples {w,k} qui correspondent chacun à des conditions tarifaires différentes, mais demeurent toujours d'application locale.

On peut également, au lieu de calculer la durée totale du segment Si et la part de cette durée qui passe par les stations BAi, calculer respectivement la part qui passe par les stations BAi, et celle qui passe par les autres stations BBj, de manière équivalente.

Cette discrétisation d'une communication téléphonique en segments Si peut être rendue aussi fine que l'on veut, et l'on pourrait également utiliser des intervalles de temps très brefs pour faire des mesures de t et t', dont on calculerait ensuite par exemple la moyenne, ou toute autre fonction convenable susceptible de procurer un résultat semblable.

Un autre aspect important de l'invention est que le périmètre dont il s'agit corresponde à la délimitation des établissements d'une entité ou d'un groupe d'entités, tandis que la modulation de la tarification des appels est fonction de conditions prédéfinies entre l'entité ou groupe d'entités et l'exploitant de la station de gestion, remarque étant faite qu'on puisse également prévoir un accord avec plusieurs exploitants, sur un même périmètre.

Le confinement de la zone rayonnante des bornes proximales BAi "vers l'intérieur du périmètre P" n'exclut pas que ces bornes soient actives sur le périmètre lui-même, et même légèrement à l'extérieur. Autrement dit, le périmètre peut être un peu plus large que la délimitation exacte des locaux ou établissements de la ou des entités mentionnées ci-dessus.

Ces conditions prédéfinies permettent d'assurer la mise en place de l'infrastructure nécessaire au niveau du périmètre couvert. Quoique légère, cette infrastructure engendre un surcoût, dont la charge peut être assurée, en partie au moins, par le fait que le périmètre correspond par exemple à une chaîne de distribution (supermarché), ou bien un restaurant, ou encore à un hôtel, ou à d'autres établissements de ce genre.

Le client, c'est-à-dire l'usager téléphonique, peut accepter de pouvoir téléphoner plus longtemps à moindre coût, en contrepartie d'une certaine réduction de son autonomie et de sa mobilité dans l'espace. Il en résulte, entre autres avantages, une meilleure rentabilité des bornes proximales qui se trouvent implantées à l'endroit choisi.

L'entité locale, dans la mesure où il s'agit par exemple d'une chaîne de distribution, celle-ci est intéressée de voir davantage de clients chez elle, et peut échanger ce service contre l'acceptation d'autres prestations.

Ceci vaut également dans le cas de l'hôtellerie, remarque étant faite que l'hôtel peut décider de diminuer ou au contraire d'augmenter la tarification, si l'on tient compte des pratiques actuelles.

Enfin, l'opérateur du réseau téléphonique mobile y tire également un avantage en ayant une meilleure maîtrise du déploiement de son réseau, dont il pourrait même aller jusqu'à confier localement l'exploitation à l'entité résidente.

C'est ainsi que la station centrale 100 de la figure 1 pourrait être placée localement, voire gérée en sous-traitance par l'entité locale.

Un autre avantage important de la présente invention est qu'elle s'appuie quasi intégralement sur des équipements standards, auxquels on ne réalise que quelques ajouts pour contrôler le rayonnement des bornes proximales, et un module de calcul de tarification un peu plus complexe, ce qui demeure cependant facile à réaliser à faibles coûts.

Bien entendu, la présente invention n'est pas limitée aux communications vocales, et peut également s'appliquer à de nombreux autres types d'échanges de données diverses.

L'invention pourrait même servir dans d'autres classes d'applications, pour lesquelles la connaissance de la position géographique exacte n'est pas nécessaire, tandis que suffit la connaissance d'une estimée de l'appartenance ou d'un taux d'appartenance de l'entité appelante à un périmètre donné.

Ainsi, une application associée aux appels, autre que la tarification, peut aussi comprendre l'enregistrement de données relatives auxdits appels et/ou aux usagers, au profit au moins d'un exploitant ou analogue. Dans ce cas, la modulation du traitement de ces données selon l'invention est fonction du passage de ces appels dans le périmètre couvert par la ou les bornes ainsi agencées selon l'invention. La modulation du traitement des données peut aussi être également fonction de conditions prédéfinies entre l'entité ou groupe d'entités et certains au moins des usagers.

En pratique, la présence d'un poste portatif d'un abonné ou client dans une zone d'une entité locale est susceptible d'être détectée par les bornes BAi (associée à cette zone). Cette détection de présence peut avoir lieu, que le poste portatif soit en communication ou en veille.

Dans ce cas, l'entité locale peut maintenir une base de données où est mémorisée la liste des client Ck, qui sont venus ou qui sont actuellement dans sa zone géographique (périmètre P). De façon plus précise dans cette base de données, chaque entrée, correspondant à un client particulier, contient les différentes plages horaires pendant lesquelles il a été (ou est) présent dans la zone géographique de l'entité locale. Cette base de données peut être reliée à d'autres bases de données de l'entité locale en vue de définir différents profils de clients. Par exemple, nature et/ou volume des achats effectués par un client en fonction de son temps de présence.

On peut aussi prévoir que l'entité locale, sachant qu'un client Ck, est présent dans sa zone géographique, se serve du poste portatif du client CK, comme moyen de communication privilégié et personnalisé avec le client Ck pendant la période de temps correspondant à sa présence dans la zone de localisation physique associée à l'entité locale.

Jusqu'à présent la description porte sur une délimitation des périmètres assurée par le contrôle du rayonnement et l'agencement des bornes du réseau cellulaire. Toutefois, la présente invention n'est pas limitée à cette unique mise en oeuvre mais porte également sur une variante dans laquelle des interfaces de communications conjointes sont prévues pour assurer les communications des postes portatifs à l'intérieur des périmètres à traitement sélectif comme décrit ci-avant.

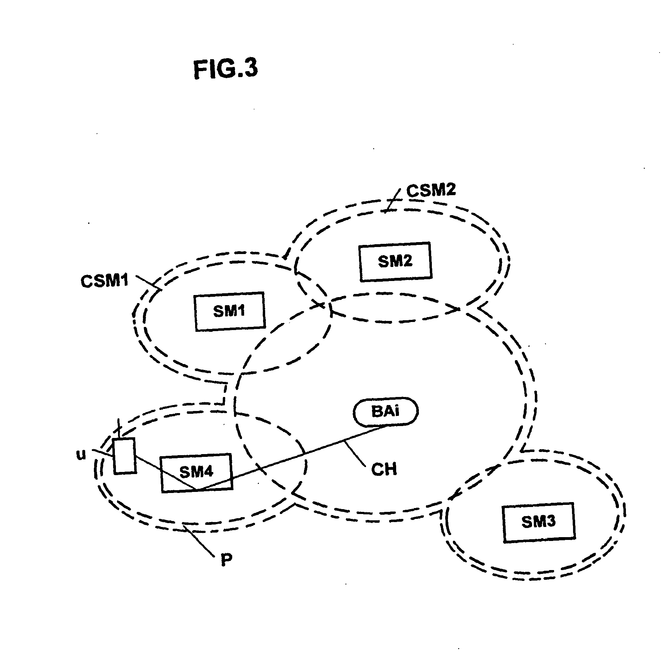

En référence à la figure 3, on a représenté l'implantation d'éléments téléphoniques permettant d'assurer une communication indirecte entre les postes portatifs U et une borne BA agencée selon l'invention. La couverture du périmètre peut être assurée par un réseau de téléphonie sans fil local indépendant du réseau de téléphonie cellulaire global (utilisé à l'extérieur du périmètre). Par exemple, on peut avoir recours à un réseau de téléphonie micro-cellulaire, comme celui de la technologie DECT à, ou du type réseau ad hoc (dont on trouvera une description détaillée ci-après).

Les postes portatifs U sont ici équipés, de préférence, de moyens de communication "courte portée radiofréquence", comme ceux utilisant la technologie "bluetooth" telle que décrite dans le document "Specification of the bluetooth system core".

Selon l'invention, il est prévu de distribuer une pluralité de stations mobiles SM qui vont assurer l'accès indirect à la borne BA.

Les stations mobiles SM sont agencées de telle façon qu'elles couvrent sensiblement exactement l'intérieur d'un périmètre choisi. Par exemple, le périmètre CSM1 est délimité par la station mobile SM1 tandis que le périmètre CSM2 est délimité par la station mobile SM2. L'union des périmètres des stations mobiles SM1 à SM4 définit un périmètre choisi P.

Chaque station mobile SM1 à SM4 est apte à établir une communication radiofréquence de courte portée de type dynamique à l'intérieur du périmètre associé, entre les postes portatifs d'usager et la borne BA.

Les postes portatifs d'usager U sont avantageusement équipés de moyens de communication radiofréquence de courte portée conjugués avec les stations mobiles SM.

Les stations mobiles SM sont ainsi agencées pour créer un chemin de communication CH entre le poste portatif U et la borne BA, en utilisant les moyens de communications courte portée radiofréquence disponibles sur ces stations mobiles et postes portatifs. En pratique, ce routage de type réseau ad hoc peut être mis en oeuvre au dessus de la couche liaison par exemple, par la technologie "Wavelan"; ou encore la technologie "bluetooth" mentionnée ci-avant.

En pratique, les stations mobiles et les postes portatifs disposent de protocoles nécessaires à l'implantation de ce routage. Par exemple, le protocole de routage ad hoc consiste, pour chaque noeud, à périodiquement échanger avec ses voisins les chemins qu'il connaît pour atteindre les autres noeuds du réseau, en particulier la borne Ba. Un tel protocole est décrit par exemple dans l'article "Multi-Hop Wireless Ad Hoc Network Routing Protocols" de J.Broch, D.A. Maltz, D.B.Johnson, Y-C.Hu J.Jetcheva; Proc.of the fourth Annual ACM/IEEE International Conference on Mobile Computing and Networking (Mobicom'98) October 25-30, 1998, Dallas, Texas, USA.

La topologie du réseau est dynamique. Elle évolue en fonction des déplacements possibles des stations mobiles et des postes portatifs. Cependant, l'agencement des stations mobiles doit se faire de telle sorte qu'il existe toujours un chemin entre le poste portatif U et la borne BA pour le périmètre considéré. De plus, la borne BA est capable de router des appels en provenance des stations mobiles vers d'autres bornes proximales BAi. Pour cela, chaque borne BAi est équipée d'une interface "courte portée radiofréquence" et d'une interface cellulaire classique.

En présence d'un tel réseau ad hoc, ce réseau d'accès indirect est systématiquement privilégié au détriment de l'accès indirect à une borne BAi.

Une station mobile SM peut aussi être un poste portatif U uniquement utilisé à des fins de routage. Dans ce sens, l'agencement des stations mobiles SM peut être réalisé de telle façon qu'en association avec une borne BAi, elles servent aussi à caractériser un périmètre choisi. La borne BAi est alors considérée comme l'entité de gestion du périmètre ainsi défini (par exemple, l'identification du périmètre pour l'ensemble du réseau).

Une station mobile SM peut aussi être un poste portatif à part entière, à la condition de contrôler le nombre de noeuds mobiles intermédiaires nécessaires pour acheminer un message entre un poste portatif émetteur U et une borne BA, afin d'éviter que le poste portatif n'achemine du trafic lorsqu'il est à l'extérieur du périmètre à traitement sélectif.

Un tel contrôle peut être réalisé en associant un compteur de messages Cpt-MESS (entier réel positif) dont la valeur est initialisée avec le nombre maximal de noeuds que ce message est autorisé à traverser, et qui est décrémenté d'une unité à chaque noeud (ici poste portatif U) traversé. Le contrôle peut prévoir que si la valeur du compteur est nulle avant que le message n'ait atteint la borne BA, le message est détruit. Pour des raisons d'autonomie des postes portatif, il est prévu de soumettre ce contrôle à l'autorisation des usagers.

Le contrôle du nombre de noeuds traversés est nécessaire pour éviter qu'il ne se crée un réseau ad hoc entre un poste portatif qui n'appartient pas au périmètre considéré, ce qui permettrait au porteur de ce poste portatif de bénéficier d'"avantages" liés à l'appartenance au périmètre considéré sans y être physiquement présent.

D'une façon générale, la présente invention a considéré que les stations mobiles relèvent de l'exploitant du site. Cependant, il n'est pas exclu selon l'invention que des postes portatifs appartenant aux clients/abonnés puissent participer aux fonctions de routage au même titre que les stations mobiles.

Pour tenir compte des problèmes pouvant survenir soit dans l'utilisation de l'interface courte portée radiofréquence dans une zone géographique donnée, soit pour des besoins de configuration de routage, la borne BAi de ladite zone configure les postes portatifs U et les stations mobiles SM, le cas échéant, de façon appropriée. Par exemple, l'interface Bluetooth généralement désactivée pour des raisons de partage de fréquence peut être activée par une borne BAi dans la cellule de ladite borne.

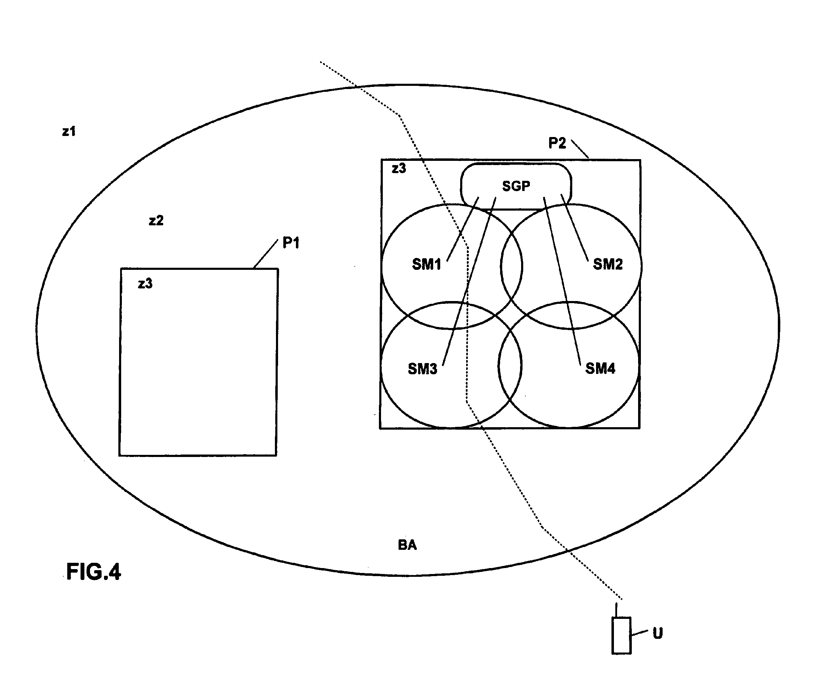

D'une façon générale, la présente invention a considéré qu'une borne BAi prend en charge au plus un périmètre caractérisé par un ensemble de stations mobiles (figure 3). Cependant, il n'est pas exclu selon l'invention (figure 4) de remplacer une borne BAi par une station de gestion de périmètre SGP, indépendante du réseau cellulaire (par exemple un autocommutateur de type PABX avec ou sans fil), qui relaie les communications des usagers d'un périmètre vers un réseau téléphonique.

Par exemple, en référence à la figure 4, la borne BA couvre une zone Z2 à deux périmètres à traitement sélectif P1 et P2, selon l'invention. Chaque périmètre P est défini par un ensemble de stations mobiles SM, ici les stations mobiles SM1 à SM4 pour le périmètre P2. Une station de gestion de périmètre SGP remplace la borne BA pour le périmètre P2 ainsi défini.

En figure 4, un usager est à l'extérieur Z1 de la zone Z2. L'usager possède un poste portatif U, géré par un opérateur en mode cellulaire. Lorsque l'usager entre dans la zone Z2, la borne BA active l'interface "courte portée radiofréquence" du poste portatif U mais le poste portatif U communique toujours en mode cellulaire avec la borne BAi. A son entrée dans le périmètre P2, la gestion des communications bascule sur la station de gestion de périmètre SGP associée au périmètre P2, entraînant ainsi l'application du traitement sélectif défini pour le périmètre considéré. A sa sortie de la zone Z3, les communications sont à nouveau assurées en mode cellulaire (géré par une borne BAi).

## Revendications

1. Procédé de téléphonie mobile, dans lequel :
a) on prévoit au moins une application apte à exploiter la position d'un usager porteur d'un poste portatif (Ui) pour moduler au moins certaines caractéristiques de ladite application,
b) on prévoit au moins une borne d'accès (Bai) appartenant à une infrastructure de communication choisie, pour permettre l'accès à ladite application à au moins un poste portatif d'usager (Ui) selon une couverture géographique choisie (Z2),
c) on prévoit au moins une station mobile (SMi) distribuée dans la zone de couverture (Z2) de la borne d'accès (Bai),
d) on équipe la station mobile (SMi) de moyens de communication aptes à établir une communication radiofréquence de courte portée à l'intérieur d'un périmètre choisi (P1, P2) entre le poste portatif d'usager (Ui) et la station mobile (SMi), et
e) on équipe au moins un poste portatif d'usager (Ui) de moyens de communication radiofréquence de courte portée conjugués avec ceux de la station mobile (SMi) pour établir ladite communication radiofréquence de courte portée à l'intérieur du périmètre choisi (P1, P2) entre le poste portatif (Ui) et la station mobile (SMi)
ce qui permet audit poste portatif d'usager (Ui) de communiquer avec la station mobile (SMi) ainsi qu'avec la borne d'accès (Bai) pour accéder à ladite application adaptée selon la position de l'usager.

2. Procédé selon la revendication 1, **caractérisé en ce qu'**au moins certaines caractéristiques de l'application appartiennent au groupe formé par l'absence/présence de l'usager, la tarification de ladite application.

3. Procédé selon la revendication 1, **caractérisé en ce qu'**on prévoit une pluralité de stations mobiles (SMi), agencées en réseau de telle sorte que ledit réseau couvre sensiblement exactement l'intérieur d'un périmètre choisi (P1, P2).

4. Procédé selon la revendication 1, **caractérisé en ce que** la station mobile (SMi) est apte à établir une communication avec la borne d'accès (Bai), la station mobile (SMi) jouant ainsi le rôle d'un poste portatif.

5. Procédé selon la revendication 1, **caractérisé en ce qu'**on prévoit une infrastructure de communication appartenant au groupe formé par le réseau cellulaire global du type GSM, UMTS ou analogue, le réseau local de type ad hoc ou analogue.

6. Procédé selon la revendication 1, **caractérisé en ce qu'**on prévoit un poste portatif appartenant au groupe formé par les téléphones mobiles, ou analogues.

7. Procédé selon l'une des revendications précédentes, **caractérisé en ce que** la station mobile est adaptée pour communiquer directement avec le poste portatif d'usager (Ui) pendant la période de temps correspondant à sa présence dans le périmètre.

8. Dispositif de téléphonie mobile comprenant au moins une borne d'accès (Bai) appartenant à une infrastructure de communication choisie, avec une couverture géographique choisie (Z2),
**caractérisé en ce qu'**il comprend au moins une station mobile (SMi) distribuée dans la zone de couverture (Z2) de la borne d'accès (Bai), ayant des moyens de communication aptes à établir une communication radiofréquence de courte portée à l'intérieur d'un périmètre choisi (P1, P2),
et **en ce que** le dispositif est agencé pour interagir avec au moins un poste portatif d'usager (Ui), équipé de moyens de communication radiofréquence de courte portée conjugués avec ceux de la station mobile,
de sorte qu'en présence d'un poste portatif à l'intérieur dudit périmètre, il s'établisse entre le poste et la station une communication radiofréquence de courte portée, permettant au poste portatif d'usager (Ui) d'accéder à une application choisie susceptible d'exploiter la position de l'usager porteur du poste portatif (Ui) pour moduler au moins certaines caractéristiques de ladite application.

9. Dispositif de téléphonie mobile selon la revendication 8, **caractérisé en ce que** certaines au moins des stations mobiles (SMi) sont adaptées pour jouer le rôle d'un poste portatif.

## Claims

1. Mobile telephony method, wherein:
a) at least one application is provided which is adapted to utilise the position of a user carrying a portable handset (Ui) in order to modify at least some features of said application,
b) at least one access terminal (Bai) is provided, belonging to a selected communications infrastructure, to allow access to said application by at least one portable user handset (Ui) according to a selected geographical coverage (Z2),
c) at least one mobile station (SMi) is provided which is distributed over the coverage zone (Z2) of the access terminal (Bai),
d) the mobile station (SMi) is equipped with communication means adapted to establish a short-range radiofrequency communication within a selected perimeter (P1, P2) between the portable user handset (Ui) and the mobile station (SMi), and
e) at least one portable user handset (Ui) is equipped with short-range radiofrequency communication means compatible with those of the mobile station (SMi) in order to establish said short-range radiofrequency communication within the selected perimeter (P1, P2) between the portable handset (Ui) and the mobile station (SMi),
thus enabling said portable user handset (Ui) to communicate with the mobile station (SMi) and with the access terminal (Bai) to access said application which is adapted according to the position of the user.

2. Method according to claim 1, **characterised in that** at least some features of the application belong to the group formed by the presence or absence of the user and the tariff for said application.

3. Method according to claim 1, **characterised in that** a plurality of mobile stations (SMi) are provided, arranged in a network such that said network covers substantially precisely the area within a selected perimeter (P1, P2).

4. Method according to claim 1, **characterised in that** the mobile station (SMi) is adapted to establish communication with the access terminal (Bai), the mobile station (SMi) thus acting as a portable handset.

5. Method according to claim 1, **characterised in that** a communications infrastructure is provided, belonging to the group formed by the global cellular network of the GSM or UMTS type or the like, the local network of the ad-hoc type or the like.

6. Method according to claim 1, **characterised in that** a portable handset is provided belonging to the group comprising mobile telephones or the like.

7. Method according to one of the preceding claims, **characterised in that** the mobile station is adapted to communicate directly with the portable user handset (Ui) throughout the period of time corresponding to its presence within the perimeter.

8. Mobile telephony device comprising at least one access terminal (Bai) belonging to a selected communications infrastructure, with a selected geographical coverage (Z2),
**characterised in that** it comprises at least one mobile station (SMi) distributed over the coverage zone (Z2) of the access terminal (Bai), having communication means adapted to establish a short-range radiofrequency communication within a selected perimeter (P1, P2),
and **in that** the device is arranged to interact with at least one portable user handset (Ui) equipped with short-range radiofrequency communication means compatible with those of the mobile station,
so that when a portable handset is present inside said perimeter, a short-range radiofrequency communication is established between the handset and the station, enabling the portable user handset (Ui) to access a selected application capable of utilising the position of the user carrying the portable handset (Ui) in order to modify at least certain features of said application.

9. Mobile telephony device according to claim 8, **characterised in that** at least some of the mobile stations (SMi) are adapted to act as a portable handset.

## Patentansprüche

1. Mobiltelefonieverfahren, bei dem:
a) man wenigstens eine Anwendung vorsieht, fähig die Position eines ein Mobilgerät (Ui) mitführenden Teilnehmers zu nutzen, um wenigstens einige Charakteristika der genannten Anwendung zu modulieren,
b) man wenigstens einen zu einer gewählten Kommunikations-Infrastruktur gehörenden Zugriffsanschluss (Bai) vorsieht, um wenigstens einem Teilnehmer-Mobilgerät (Ui) den Zugriff auf die genannte Anwendung gemäß einer gewählten geografischen Abdeckung (Z2) zu ermöglichen,
c) man wenigstens eine mobile Station (SMi) in der Abdeckungszone (Z2) des Zugriffanschlusses (Bai) vorsieht,
d) man die mobile Station (SMi) mit Kommunikationseinrichtungen ausrüstet, fähig eine Radiofrequenz-Kommunikation von kurzer Reichweite innerhalb eines gewählten Perimeters (P1, P2) zwischen dem Teilnehmer-Mobilgerät (Ui) und der mobilen Station (SMi) herzustellen, und
e) man wenigstens ein Teilnehmer-Mobilgerät (Ui) mit Kommunikationseinrichtungen von kurzer Reichweite ausrüstet, konjugiert bzw. verbunden mit denen der mobilen Station (SMi), um die genannte Radiofrequenz-Kommunikation von kurzer Reichweite innerhalb des gewählten Perimeters (P1, P2) zwischen dem Teilnehmer-Mobilgerät (Ui) und der mobilen Station (SMi) herzustellen,
was dem genannten Teilnehmer-Mobilgerät (Ui) ermöglicht, mit der mobilen Station (SMi) sowie mit dem Zugriffsanschluss (Bai) zu kommunizieren, um auf die genannte, gemäß der Position des Teilnehmers angepasste Anwendung zuzugreifen.

2. Verfahren nach Anspruch 1, **dadurch gekennzeichnet, dass** wenigstens einige Charakteristika der Anwendung zu der durch die Teilnehmerabwesenheit/-anwesenheit, die Tarifierung der genannten Anwendung gebildeten Gruppe gehören.

3. Verfahren nach Anspruch 1, **dadurch gekennzeichnet, dass** man eine Vielzahl von mobilen Stationen (SMi) vorsieht, die netzartig so angeordnet sind, dass das Netz das Innere eines gewählten Perimeters (P1, P2) im Wesentlichen genau abdeckt.

4. Verfahren nach Anspruch 1, **dadurch gekennzeichnet, dass** die mobile Station (SMi) fähig ist, eine Kommunikation mit dem Zugriffsanschluss (Bai) herzustellen, wobei die mobile Station (SMi) also die Rolle eines Mobilgeräts spielt.

5. Verfahren nach Anspruch 1, **dadurch gekennzeichnet, dass** man eine Kommunikations-Infrastruktur vorsieht, die zu der Gruppe gehört, die gebildet wird durch das globale Mobilfunknetz des Typs GSM, UMTS oder analog, das lokale Netz des Typs ad hoc oder analog.

6. Verfahren nach Anspruch 1, **dadurch gekennzeichnet, dass** man ein Mobilgerät vorsieht, das zu der durch Mobiltelefone oder Analoges gebildeten Gruppe gehört.

7. Verfahren nach einem der vorangehenden Ansprüche, **dadurch gekennzeichnet, dass** die mobile Station angepasst ist, um während der ihrer Anwesenheit in dem Perimeter entsprechenden Zeitperiode direkt mit dem Teilnehmer-Mobilgerät (Ui) zu kommunizieren.

8. Mobiltelefonievorrichtung mit wenigstens einem zu einer gewählten Kommunikations-Infrastruktur gehörenden Zugriffanschluss (Bai), mit einer gewählten geografischen Abdeckung (Z2),
**dadurch gekennzeichnet, dass** sie in der Abdeckungszone (Z2) des Zugriffanschlusses (Bai) wenigstens eine mobile Station (SMi) mit Kommunikationseinrichtungen umfasst, fähig eine Radiofrequenz-Kommunikation von kurzer Reichweite innerhalb eines gewählten Perimeters (P1, P2) herzustellen,
und **dadurch**, dass die Vorrichtung eingerichtet ist, um mit wenigstens einem Teilnehmer-Mobilgerät (Ui) zu interagieren, ausgerüstet mit Radiofrequenz-Kommunikationseinrichtungen von kurzer Reichweite, konjugiert bzw. verbunden mit denen der mobilen Station,
so dass bei Anwesenheit eines Teilnehmergeräts innerhalb des genannten Perimeters zwischen dem Gerät und der Station eine Radiofrequenz-Kommunikation von kurzer Reichweite entsteht, die dem Teilnehmer-Mobilgerät (Ui) ermöglicht, auf eine gewählte Anwendung zuzugreifen, welche die Position des das Mobilgerät (Ui) mitführenden Teilnehmers benutzen kann, um wenigstens einige Charakteristika der genannten Anwendung zu modulieren.

9. Mobiltelefonie-vorrichtung nach Anspruch 8, **dadurch gekennzeichnet, dass** wenigstens einige der mobilen Stationen (SMi) angepasst sind, um die Rolle eines Mobilgeräts zu spielen.
